# EUROPEAN PATENT APPLICATION

(11) **EP 4 488 317 A1**
(43) Date of publication of application: **08.01.2025**
(21) Application number: 23759784.4
(22) Date of filing: 14.02.2023
(51) Int. Cl.: C08J 3/00, C08G 65/336, C08G 77/46, C08K 5/29, C08K 5/57, C08L 71/02, C08L 83/06, C08L 83/10

(54) **METHOD FOR PRODUCING CURABLE RESIN COMPOSITION**

(30) Priority: 28.02.2022 JP 2022029563
(71) Applicant: Kaneka Corporation, Osaka-shi, Osaka 530-8288 (JP)
(72) Inventor: SAITO, Takahiro, Takasago-shi, Hyogo 676-8688 (JP)
(74) Representative: Vossius & Partner Patentanwälte Rechtsanwälte mbB
(86) International application number: PCT/JP2023/005020
(87) International publication number: WO 2023/162782

(57) **Abstract**

A method for producing a curable resin composition includes the step of hermetically storing a raw material composition at a temperature of 40 to 150°C. The raw material composition contains: a polysilsesquioxane polymer (A) having a reactive silyl group and a hydrocarbon group bonded directly to a silicon atom of a polysilsesquioxane backbone; a polyalkylene oxide polymer (B) having a reactive silyl group and having no polysilsesquioxane backbone; and a curing catalyst (C) including a tetravalent tin catalyst and/or a strong base catalyst.

## Description

### Technical Field

The present invention relates to a method for producing a curable resin composition containing a polysilsesquioxane polymer and a polyalkylene oxide polymer having a reactive silyl group.

### Background Art

An organic polymer that has a silicon-containing group having a hydroxy or hydrolyzable group on a silicon atom and capable of forming a siloxane bond (this silicon-containing group will be hereinafter referred to as a "reactive silyl group") is known as a moisture-reactive polymer. This kind of organic polymers are contained in many industrial products such as adhesives, sealing materials, coating materials, paints, and pressure-sensitive adhesives and used in diverse fields. Among the reactive silyl group-containing organic polymers, those whose backbone is a polyalkylene oxide polymer are in widespread use.

A known technique for improving the mechanical properties that such a reactive silyl group-containing polyalkylene oxide polymer exhibits after curing is to blend the polyalkylene oxide polymer with a polysilsesquioxane polymer. The polysilsesquioxane polymer is a siloxane polymer formed by a hydrolysis-dehydration condensation reaction of an organotrialkoxysilane and is represented by the composition formula (RSiO_{1.5})ₙ. In this formula, R is a monovalent organic group such as a methyl group.

For example, Patent Literature 1 discloses a crosslinking composition containing: a polymer having a reactive silyl group; and a silicone resin containing a silsesquioxane unit.

Patent Literature 2 discloses a composition containing: a silsesquioxane containing a phenyl group and an alkoxy group; a silylated polymer containing an alkoxysilane group; and a carbonate salt filler.

### Citation List

### Patent Literature

PTL 1: Japanese Laid-Open Patent Application Publication (Translation of PCT Application) No. 2014-521819
PTL 2: Japanese Laid-Open Patent Application Publication (Translation of PCT Application) No. 2020-521034

### Summary of Invention

### Technical Problem

Conventionally, a curable resin composition containing a polysilsesquioxane polymer and a reactive silyl group-containing polyalkylene oxide polymer lacks sufficient curability, and curing of the composition could require a lot of time.

In view of the above circumstances, the present invention aims to provide a method for producing a curable resin composition with improved curability that contains a polysilsesquioxane polymer and a reactive silyl group-containing polyalkylene oxide polymer.

### Solution to Problem

As a result of intensive studies with the goal of solving the above problem, the present inventors have found that the problem can be solved by blending a curable resin composition containing a polysilsesquioxane polymer and a reactive silyl group-containing polyalkylene oxide polymer with a given curing catalyst and hermetically storing the composition under heating conditions. This finding has led the inventors to the present invention.

Specifically, the present invention relates to a method for producing a curable resin composition, the method including the step of hermetically storing a raw material composition at a temperature of 40 to 150°C, wherein the raw material composition contains: a polysilsesquioxane polymer (A) having a reactive silyl group and a hydrocarbon group bonded directly to a silicon atom of a polysilsesquioxane backbone; a polyalkylene oxide polymer (B) having a reactive silyl group and having no polysilsesquioxane backbone; and a curing catalyst (C) including a tetravalent tin catalyst and/or a strong base catalyst.

### Advantageous Effects of Invention

The present invention can provide a method for producing a curable resin composition with improved curability that contains a polysilsesquioxane polymer and a reactive silyl group-containing polyalkylene oxide polymer.

The present invention allows for production of a curable resin composition that exhibits high workability when, for example, applied to a substrate and that exhibits markedly improved curability.

The present invention allows for production of a curable resin composition that can give a cured product with high strength.

### Description of Embodiments

Hereinafter, embodiments of the present invention will be described in detail.

A curable resin composition according to the present disclosure contains at least: a polysilsesquioxane polymer (A) having a reactive silyl group and a hydrocarbon group; a polyalkylene oxide polymer (B) having a reactive silyl group; and a given curing catalyst (C). The curable resin composition can cure to form a cured product through hydrolysis and dehydration condensation of the reactive silyl groups of the polysilsesquioxane polymer (A) and the polyalkylene oxide polymer (B).

### «Polysilsesquioxane Polymer (A)»

The polysilsesquioxane polymer (A) has at least a polysilsesquioxane backbone, a reactive silyl group (a1), and a hydrocarbon group (a2). The polysilsesquioxane polymer (A) may further have a polyalkylene oxide polymer chain and/or poly(meth)acrylic polymer chain (a3).

The polysilsesquioxane backbone refers to a siloxane polymer backbone represented by the composition formula (RSiO_{1.5})ₙ and is composed of a product of hydrolysis and condensation of an alkoxysilane component containing at least an organotrialkoxysilane.

The organotrialkoxysilane refers to a silane compound having one organic group bonded to a silicon atom and three alkoxy groups bonded to the silicon atom and is represented by the formula RSi(OR')₃. In this formula, R is the organic group and OR' is the alkoxy group. The organic group refers to an organic group other than alkoxy groups, and examples of the organic group include alkyl, aryl, and alkenyl groups. The organic group preferably contains an alkyl group having 1 to 10 carbon atoms and/or an aryl group having 6 to 10 carbon atoms.

The alkoxy group OR' bonded to the silicon atom may be, in particular, an alkoxy group having 1 to 3 carbon atoms. More specific examples include methoxy, ethoxy, and propoxy groups. Methoxy and ethoxy groups are preferred, and a methoxy group is more preferred. There may be only one type, or two or more types, of such alkoxy groups.

Specific examples of the organotrialkoxysilane whose organic group is an alkyl group include, but are not limited to, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, butyltrimethoxysilane, butyltriethoxysilane, butyltriisopropoxysilane, pentyltrimethoxysilane, pentyltriethoxysilane, pentyltriisopropoxysilane, hexyltrimethoxysilane, octyltrimethoxysilane, and decyltrimethoxysilane. Among these, methyltrialkoxysilanes are preferred, and methyltrimethoxysilane is particularly preferred.

Examples of the organotrialkoxysilane whose organic group is an aryl group include, but are not limited to, phenyltrimethoxysilane, phenyltriethoxysilane, phenyltripropoxysilane, tolyltrimethoxysilane, tolyltriethoxysilane, tolyltripropoxysilane, xylyltrimethoxysilane, xylyltriethoxysilane, xylyltripropoxysilane, naphthyltrimethoxysilane, naphthyltriethoxysilane, and naphthyltripropoxysilane. Among these, phenyltrialkoxysilanes are preferred, and phenyltrimethoxysilane is particularly preferred.

In the alkoxysilane component, the total proportion of the organotrialkoxysilane whose organic group is an alkyl group and the organotrialkoxysilane whose organic group is an aryl group is preferably from 80 to 100 mol%, more preferably from 90 to 100 mol%, even more preferably from 95 to 100 mol%, and particularly preferably from 99 to 100 mol% in terms of the physical properties of the polysilsesquioxane polymer (A). Examples of alkoxysilanes other than the organotrialkoxysilane whose organic group is an alkyl group and the organotrialkoxysilane whose organic group is an aryl group include organotrialkoxysilanes whose organic group is neither the alkyl group nor the aryl group, diorganodialkoxysilanes, triorganomonoalkoxysilanes, and tetraalkoxysilanes.

### <Reactive Silyl Group (a1)>

The polysilsesquioxane polymer (A) has a reactive silyl group (a1), and this group is bonded to the polysilsesquioxane backbone.

The term "reactive silyl group" as used herein refers to a silyl group having a hydroxy or hydrolyzable group on a silicon atom and capable of undergoing a hydrolysis and dehydration condensation reaction in the presence of water and optionally a condensation catalyst used as necessary.

Specific examples of the reactive silyl group (a1) include alkoxysilyl and silanol groups. The reactive silyl group (a1) may be an alkoxysilyl group or a silanol group. The reactive silyl group (a1) may have both an alkoxysilyl group and a silanol group. Thanks to the presence of the reactive silyl group (a1), the polysilsesquioxane polymer (A) is curable by a hydrolysis and dehydration condensation reaction.

The alkoxysilyl group is a group represented by -SiOR'. In production of the polysilsesquioxane polymer (A), some of alkoxy groups contained in an alkoxysilane used as a raw material remain unreacted. The alkoxysilyl group corresponds to such an alkoxy group remaining unreacted. The alkoxysilyl group may be, for example, an alkoxysilyl group having 1 to 3 carbon atoms. Specific examples include methoxysilyl, ethoxysilyl, and propoxysilyl groups. Methoxysilyl and ethoxysilyl groups are preferred, and a methoxysilyl group is more preferred. There may be only one type, or two or more types, of such alkoxysilyl groups.

The silanol group is a group represented by -SiOH. In production of the polysilsesquioxane polymer (A), hydrolysis of alkoxy groups contained in an alkoxysilane used as a raw material is followed by dehydration condensation of the hydrolyzed groups; however, some of the hydrolyzed groups do not undergo dehydration condensation but remain without forming a siloxane bond. The silanol group corresponds to such a hydrolyzed group remaining without forming a siloxane bond.

### <Hydrocarbon Group (a2)>

The polysilsesquioxane polymer (A) further has a hydrocarbon group (a2). This group is bonded directly to a silicon atom of the polysilsesquioxane backbone and is a substituent on the silicon atom. The hydrocarbon group (a2) is preferably an alkyl group having 1 to 10 carbon atoms and/or an aryl group having 6 to 10 carbon atoms.

Examples of the alkyl group having 1 to 10 carbon atoms, which is an example of the hydrocarbon group (a2), include methyl, ethyl, propyl, butyl, pentyl, hexyl, octyl, and decyl groups. The number of carbon atoms in the alkyl group is preferably from 1 to 4, more preferably from 1 to 3, even more preferably 1 or 2, and particularly preferably 1. The alkyl group may be unsubstituted or may be substituted with a heteroatom-containing group such as a halogen atom, an alkoxy group, or an acyl group. There may be only one type, or two or more types, of such alkyl groups.

Examples of the aryl group having 6 to 10 carbon atoms, which is another example of the hydrocarbon group (a2), include phenyl, tolyl, xylyl, and naphthyl groups. The number of carbon atoms in the aryl group is preferably from 6 to 10, more preferably from 6 to 8, even more preferably 6 or 7, and particularly preferably 6. The aryl group may be unsubstituted or may be substituted with a heteroatom-containing group such as a halogen atom, an alkoxy group, or an acyl group. There may be only one type, or two or more types, of such aryl groups.

The molar ratio between the alkyl group and the aryl group (alkyl group:aryl group) which are contained as the hydrocarbon group (a2) may be from 0:100 to 100:0 or may be from 1:99 to 99:1. In particular, in terms of the visual appearance of the cured product, the molar ratio is preferably from 45:55 to 99:1.

### <Polymer Chain (a3)>

The polysilsesquioxane polymer (A) preferably further has a polyalkylene oxide polymer chain and/or poly(meth)acrylic polymer chain (a3). The presence of the polymer chain (a3) can improve the storage stability of the polysilsesquioxane polymer (A). The polysilsesquioxane polymer (A) may be one that has a polyalkylene oxide polymer chain as the polymer chain (a3) and does not have any poly(meth)acrylic polymer chain or may be one that has a poly(meth)acrylic polymer chain as the polymer chain (a3) and does not have any polyalkylene oxide polymer chain. The polysilsesquioxane polymer (A) may have both a polyalkylene oxide polymer chain and a poly(meth)acrylic polymer chain.

In the polysilsesquioxane polymer (A), the polymer chain (a3) may be bonded at its side chains and/or ends to the polysilsesquioxane backbone, but is preferably bonded at one side chain or one end to the polysilsesquioxane backbone. More preferably, only one end of the polymer chain (a3) is bonded to the polysilsesquioxane backbone. That is, it is more preferable that only a particular one of the ends of the polymer chain (a3) be bonded to the polysilsesquioxane backbone and the end other than the particular end be free without being bonded to the polysilsesquioxane backbone. In this case, the polymer chain (a3) can be considered a monovalent substituent in the polysilsesquioxane polymer (A).

In the polysilsesquioxane polymer (A), the polyalkylene oxide polymer chain and/or poly(meth)acrylic polymer chain present as the polymer chain (a3) preferably has no reactive silyl group.

The bond between the polysilsesquioxane backbone and the polymer chain (a3) is not limited to a particular type. In terms of stability, the polysilsesquioxane backbone and the polymer chain (a3) are preferably bonded via a siloxane bond (-Si-O-). Such a siloxane bond can be formed, for example, by a reaction of an alkoxysilane component with a polyalkylene oxide polymer terminated at one end by a reactive silyl group and/or a poly(meth)acrylic polymer having a reactive silyl group. This reaction will be described later.

Examples of the polymer backbone of the polyalkylene oxide polymer chain which is an example of the polymer chain (a3) include, but are not limited to, polyoxyethylene, polyoxypropylene, polyoxybutylene, polyoxytetramethylene, polyoxyethylene-polyoxypropylene copolymer, and polyoxypropylene-polyoxybutylene copolymer. Among these, polyoxypropylene is preferred.

The polyalkylene oxide polymer chain preferably has a linear polymer backbone. Preferably, only one of the two ends of the linear polymer backbone is bonded to the polysilsesquioxane backbone.

The polymer backbone of the poly(meth)acrylic polymer chain which is another example of the polymer chain (a3) is preferably formed from a (meth)acrylic ester monomer. Examples of the (meth)acrylic ester monomer include, but are not limited to, methyl (meth)acrylate, ethyl (meth)acrylate, *n*-propyl (meth)acrylate, isopropyl (meth)acrylate, *n*-butyl (meth)acrylate, isobutyl (meth)acrylate, *tert*-butyl (meth)acrylate, *n*-pentyl (meth)acrylate, *n*-hexyl (meth)acrylate, cyclohexyl (meth)acrylate, *n*-heptyl (meth)acrylate, *n*-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate. Among these, (meth)acrylic alkyl esters are preferred, acrylic alkyl esters are more preferred, and butyl acrylate is particularly preferred.

The (meth)acrylic ester monomer may be used in combination with another copolymerizable monomer. However, the proportion of the (meth)acrylic ester monomer in the total monomers constituting the poly(meth)acrylic polymer chain is preferably from 60 to 100 wt%, more preferably 80 wt% or more, even more preferably 90 wt% or more, and particularly preferably 95 wt% or more.

The poly(meth)acrylic polymer chain preferably has a linear polymer backbone. Preferably, only one of the two ends of the linear polymer backbone is bonded to the polysilsesquioxane backbone.

The proportion of the polymer chain (a3) which may be contained in the polysilsesquioxane polymer (A) is not limited to a particular range. To benefit enough from the effect provided by the polymer chain (a3), the weight ratio of the total amount of the hydrocarbon group (a2) to the total amount of the polymer chain (a3) is preferably from 10:90 to 90:10. The weight ratio is more preferably from 15:85 to 85:15. The weight ratio may be from 20:80 to 80:20 or may be from 30:70 to 70:30.

The number-average molecular weight of the polysilsesquioxane polymer (A) is not limited to a particular range, but is preferably from 400 to 10,000 and more preferably from 500 to 5,000. The number-average molecular weight of the polysilsesquioxane polymer (A) can be measured by GPC.

### <Production of Polysilsesquioxane Polymer (A)>

The polysilsesquioxane polymer (A) can be produced by subjecting the above-described alkoxysilane component containing an organotrialkoxysilane to a hydrolysis and dehydration condensation reaction in the presence of water and optionally a condensation catalyst used as necessary.

In an aspect where the polysilsesquioxane polymer (A) further contains the polymer chain (a3), the hydrolysis and dehydration condensation reaction may be carried out in the presence of a polyalkylene oxide polymer terminated by a reactive silyl group and/or a poly(meth)acrylic polymer having a reactive silyl group.

Alternatively, the polysilsesquioxane polymer (A) that further contains the polymer chain (a3) can be produced by carrying out the hydrolysis and dehydration condensation reaction in the presence of an alkoxysilane having a radical-polymerizable group or an alkoxysilane having a mercapto group, then adding the above-described (meth)acrylic ester monomer, and performing radical polymerization of the (meth)acrylic ester monomer.

Examples of the alkoxysilane having a radical-polymerizable group include, but are not limited to, (3-trimethoxysilyl)propyl (meth)acrylate, (3-triethoxysilyl)propyl (meth)acrylate, (3-dimethoxymethylsilyl)propyl (meth)acrylate, vinyltrimethoxysilane, and p-styryltrimethoxysilane. Examples of the alkoxysilane having a mercapto group include, but are not limited to, γ-mercaptopropyldimethoxymethylsilane, γ-mercaptopropyltrimethoxysilane, (mercaptomethyl)dimethoxymethylsilane, and (mercaptomethyl)trimethoxysilane.

The dehydration condensation reaction takes place between alkoxy groups of the alkoxysilane component itself, resulting in formation of the polysilsesquioxane backbone.

When the above-mentioned polyalkylene oxide polymer terminated by a reactive silyl group and/or poly(meth)acrylic polymer having a reactive silyl group is used, the dehydration condensation reaction also takes place between alkoxy groups of the alkoxysilane component and reactive silyl groups of the polyalkylene oxide polymer or the poly(meth)acrylic polymer, leading to the polymer chain (a3) being boned to the polysilsesquioxane backbone.

In the reaction process, some of the alkoxy groups contained in the alkoxysilane component remain unreacted, and/or after the alkoxy groups undergo hydrolysis, some of the hydrolyzed groups remain without undergoing dehydration condensation. This is why the polysilsesquioxane polymer (A) produced has an alkoxysilyl group and/or a silanol group as the reactive silyl group (a1).

The hydrolysis and dehydration condensation reaction is preferably carried out in the presence of added water. By adjusting the amount of water used, the amount of the alkoxysilyl groups and/or silanol groups in the resulting polysilsesquioxane polymer or the molecular weight of the polysilsesquioxane polymer can be controlled. From this viewpoint, the amount of water used is preferably from 20 to 80 mol%, more preferably from 25 to 70 mol%, even more preferably from 30 to 60 mol%, and particularly preferably from 35 to 50 mol% based on 100% of the total number of moles of the alkoxy groups on the silicon atoms in the alkoxysilane component.

The hydrolysis and dehydration condensation reaction is preferably carried out in the presence of a condensation catalyst to accelerate the reaction. A known condensation catalyst can be used. Specific examples of the condensation catalyst include a basic catalyst, an acidic catalyst, and a neutral salt. To improve the storage stability of the resulting polysilsesquioxane polymer, the condensation catalyst is preferably an acidic catalyst or a neutral salt and more preferably a neutral salt.

The acidic catalyst is preferably an organic acid and more preferably a phosphoric ester or a carboxylic acid in terms of compatibility with the alkoxysilane component. Specific examples of the organic acid include ethyl acid phosphate, butyl acid phosphate, dibutyl pyrophosphate, butoxyethyl acid phosphate, 2-ethylhexyl acid phosphate, isotridecyl acid phosphate, dibutyl phosphate, bis(2-ethylhexyl) phosphate, formic acid, acetic acid, butyric acid, and isobutyric acid.

Examples of the basic catalyst include: amine compounds such as *N*-ethylmorpholine, *N*-methyldiethanolamine, *N*-ethyldiethanolamine, *N*-*n*-butyldiethanolamine, *N*-*t*-butyldiethanolamine, triethylamine, *n*-butylamine, hexylamine, triethanolamine, diazabicycloundecene, and ammonia; and metal hydroxides such as sodium hydroxide and potassium hydroxide.

The neutral salt is a normal salt composed of a strong acid and a strong base. For example, the neutral salt is composed of a combination of a cation selected from ions of Group 1 elements, ions of Group 2 elements, tetraalkylammonium ions, and a guanidinium ion and an anion selected from ions of Group 17 elements other than a fluoride ion, a sulfate ion, a nitrate ion, and a perchlorate ion. In particular, the anion is preferably an ion of a Group 17 element since such an ion has high nucleophilicity, and the cation is preferably an ion which is not bulky, notably an ion of a Group 1 or 2 element, in order not to inhibit the nucleophilic action.

The neutral salt is not limited to particular compounds, and specific examples of preferred compounds include lithium chloride, sodium chloride, potassium chloride, rubidium chloride, cesium chloride, magnesium chloride, calcium chloride, strontium chloride, lithium bromide, sodium bromide, potassium bromide, rubidium bromide, cesium bromide, magnesium bromide, calcium bromide, strontium bromide, lithium iodide, sodium iodide, potassium iodide, rubidium iodide, cesium iodide, magnesium iodide, calcium iodide, and strontium iodide.

The amount of the condensation catalyst added can be adjusted as appropriate and may be, for example, from about 50 ppm to about 3 wt% based on the amount of the alkoxysilane component. To improve the stability of the polysilsesquioxane polymer (A), the amount of the condensation catalyst is preferably minimized to the extent that the condensation catalyst provides a reducing effect on the reaction time.

The reaction temperature in the hydrolysis and dehydration condensation step can be set as appropriate by those skilled in the art. For example, the reaction liquid is preferably heated to a temperature in the range of 50 to 110°C. The reaction time in the hydrolysis and dehydration condensation step can also be set as appropriate by those skilled in the art and may be, for example, from about 10 minutes to about 12 hours.

The step of removing an alcohol resulting from hydrolysis of the alkoxysilane component during production of the polysilsesquioxane polymer (A) may be performed after the hydrolysis and dehydration condensation step. In this case, the content of volatiles such as the alcohol in the polysilsesquioxane polymer (A) can be reduced. The alcohol removing step can be accomplished by subjecting the liquid mixture to distillation under normal or reduced pressure and thus distilling off the alcohol. The conditions of the distillation under normal or reduced pressure can be set as appropriate by those skilled in the art. For example, the temperature for the distillation under normal or reduced pressure may be from about 60 to about 160°C.

### <Polyalkylene Oxide Polymer Terminated by Reactive Silyl Group>

The polyalkylene oxide polymer that can be used to produce the polysilsesquioxane polymer (A) according to one aspect of the present disclosure is terminated by a reactive silyl group. In particular, the polyalkylene oxide polymer preferably has a reactive silyl group at only one end of the polymer backbone. The details of the reactive silyl group are the same as those of a reactive silyl group (b1) of a polyalkylene oxide polymer (B) described later and will therefore not be described below.

The polymer backbone of the polyalkylene oxide polymer is the same as the polymer backbone of the polyalkylene oxide polymer chain described above and will therefore not be described below.

One method for producing the polyalkylene oxide polymer terminated by the reactive silyl group is to produce a polyalkylene oxide polymer terminated by a hydroxy group through polymerization of an epoxy compound with a hydroxy group-containing initiator and then convert the hydroxy group to a reactive silyl group-containing group by using a known method.

When the hydroxy group-containing initiator used is an initiator having one hydroxy group, a polyalkylene oxide polymer according to a preferred aspect can be produced which is terminated at only one end by the reactive silyl group.

The initiator having one hydroxy group may be a monohydric alcohol, examples of which include methanol, ethanol, 2-propanol, n-butanol, isobutanol, 2-butanol, t-butanol, 2-ethylhexanol, decyl alcohol, lauryl alcohol, tridecanol, cetyl alcohol, stearyl alcohol, and oleyl alcohol. Other examples include low-molecular-weight polyoxypropylene monoalkyl ethers.

The number-average molecular weight of the polyalkylene oxide polymer terminated by the reactive silyl group is not limited to a particular range. The number-average molecular weight, as measured by GPC analysis as a polystyrene-equivalent molecular weight, is preferably from 500 to 50,000, more preferably from 500 to 30,000, and particularly preferably from 1,000 to 10,000.

The weight-average molecular weight of the polyalkylene oxide polymer terminated by the reactive silyl group is not limited to a particular range. The weight-average molecular weight, as measured by GPC analysis as a polystyrene-equivalent molecular weight, is preferably from 500 to 80,000, more preferably from 3,000 to 70,000, and particularly preferably from 5,000 to 65,000.

### <Poly(meth)acrylic Polymer Having Reactive Silyl Group>

The poly(meth)acrylic polymer that can be used to produce the polysilsesquioxane polymer (A) according to one aspect of the present disclosure has a reactive silyl group. In particular, the poly(meth)acrylic polymer preferably has a linear polymer backbone and preferably has the reactive silyl group at only one end of the linear backbone. The details of the reactive silyl group are the same as those of the reactive silyl group (b1) of the polyalkylene oxide polymer (B) described later and will therefore not be described below.

The monomer for forming the poly(meth)acrylic polymer is the same as the (meth)acrylic ester monomer described above for the poly(meth)acrylic polymer chain and will therefore not be described below.

Introduction of the reactive silyl group into the polymer backbone of the poly(meth)acrylic polymer is not limited to using a particular method and can be accomplished using any known method. In particular, one exemplary method for introducing the reactive silyl group at only one end of the polymer backbone of the poly(meth)acrylic polymer is to polymerize the monomer in the presence of a chain transfer agent having a mercapto group and the reactive silyl group. With the use of such a chain transfer agent, the reactive silyl group can be introduced at only one end of the polymer backbone of the linear poly(meth)acrylic polymer.

Examples of the chain transfer agent include, but are not limited to, γ-mercaptopropyldimethoxymethylsilane, γ-mercaptopropyltrimethoxysilane, (mercaptomethyl)dimethoxymethylsilane, and (mercaptomethyl)trimethoxysilane.

The amount of the chain transfer agent used is preferably from 0.1 to 20 wt%, more preferably from 0.3 to 15 wt%, and even more preferably from 0.5 to 7 wt%, of the total amount of the total monomers constituting the poly(meth)acrylic polymer and the chain transfer agent.

Polymerization for producing the poly(meth)acrylic polymer having the reactive silyl group is not limited to using a particular method and may be commonly-known free radical polymerization. In the free radical polymerization, it is preferable to use a polymerization initiator such as an azo compound or a peroxide.

The number-average molecular weight of the poly(meth)acrylic polymer having the reactive silyl group is not limited to a particular range. The number-average molecular weight, as measured by GPC analysis as a polystyrene-equivalent molecular weight, is preferably from 500 to 50,000, more preferably from 500 to 30,000, and particularly preferably from 1,000 to 10,000. In particular, for the polymer to have a low viscosity, the number-average molecular weight is preferably 7,000 or less.

The weight-average molecular weight of the poly(meth)acrylic polymer having the reactive silyl group is not limited to a particular range. The weight-average molecular weight, as measured by GPC analysis as a polystyrene-equivalent molecular weight, is preferably from 500 to 80,000, more preferably from 3,000 to 70,000, and particularly preferably from 5,000 to 65,000. In particular, for the polymer to have a low viscosity, the weight-average molecular weight is preferably 15,000 or less.

### «Polyalkylene Oxide Polymer (B)»

The curable resin composition according to the present disclosure contains a polyalkylene oxide polymer (B) having a reactive silyl group (b1). The polyalkylene oxide polymer (B) is a polymer having no polysilsesquioxane backbone. The fact that the polyalkylene oxide polymer (B) has no polysilsesquioxane backbone can be confirmed, for example, by ²⁹Si NMR.

Specifically, the reactive silyl group (b1) can be represented by the following formula (1).

-Si(R¹)₃₋ₐ(X)ₐ (1)

In the formula (1), R¹ groups are each independently a hydrocarbon group having 1 to 20 carbon atoms, and the hydrocarbon group may have a heteroatom-containing group. X groups are each independently a hydroxy group or a hydrolyzable group. The letter a denotes an integer of 1, 2, or 3.

R¹ is a hydrocarbon group having 1 to 20 carbon atoms. The number of carbon atoms is preferably from 1 to 12, more preferably from 1 to 6, and particularly preferably from 1 to 4. The hydrocarbon group may be an unsubstituted hydrocarbon group or may be a hydrocarbon group substituted with a substituent.

A heteroatom-containing group with which the hydrocarbon group represented by R¹ may be substituted is a group containing a heteroatom. The heteroatom is defined herein as any atom other than carbon and hydrogen atoms.

Suitable examples of the heteroatom include N, O, S, P, Si, and halogen atoms. In the heteroatom-containing group, the total number of carbon atoms and heteroatoms is preferably from 1 to 10, more preferably from 1 to 6, and even more preferably from 1 to 4.

Suitable examples of R¹ include: alkyl groups such as methyl and ethyl groups; alkyl groups having a heteroatom-containing group, such as chloromethyl and methoxymethyl groups; cycloalkyl groups such as a cyclohexyl group; aryl groups such as a phenyl group; and aralkyl groups such as a benzyl group. R¹ is preferably a methyl, methoxymethyl, or chloromethyl group, more preferably a methyl or methoxymethyl group, and even more preferably a methyl group.

Examples of X include a hydroxy group, hydrogen, halogens, and alkoxy, acyloxy, ketoximate, amino, amide, acid amide, aminooxy, mercapto, and alkenyloxy groups. Among these, alkoxy groups are preferred in terms of moderate hydrolyzability and ease of handling. Methoxy and ethoxy groups are more preferred.

The integer a is 1, 2 or 3. The integer a is preferably 2 or 3. In terms of the curability of the curable resin composition and the strength of the cured product, a is particularly preferably 2.

Specific examples of the reactive silyl group (b1) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (*N*,*N*-diethylaminomethyl)dimethoxysilyl, and (*N*,*N*-diethylaminomethyl)diethoxysilyl groups. Among these, dimethoxymethylsilyl, trimethoxysilyl, triethoxysilyl, and (methoxymethyl)dimethoxysilyl groups are preferred to allow the resulting cured product to have good mechanical properties. In terms of activity, trimethoxysilyl, (chloromethyl)dimethoxysilyl, and (methoxymethyl)dimethoxysilyl groups are more preferred, and trimethoxysilyl and (methoxymethyl)dimethoxysilyl groups are particularly preferred. In terms of stability, dimethoxymethylsilyl and triethoxysilyl groups are more preferred, and a dimethoxymethylsilyl group is particularly preferred.

The average number of the reactive silyl groups (b1) per molecule of the polyalkylene oxide polymer (B) is preferably more than 1.0, more preferably 1.3 or more, and even more preferably 1.6 or more. The upper limit of the average number is not limited to a particular value, and the average number is preferably 6 or less and more preferably 5 or less. The average number of the reactive silyl groups (b1) per molecule of the polymer (B) can be calculated from a result of NMR analysis.

Examples of the polymer backbone of the polyalkylene oxide polymer (B) include polyoxyethylene, polyoxypropylene, polyoxybutylene, polyoxytetramethylene, polyoxyethylene-polyoxypropylene copolymer, and polyoxypropylene-polyoxybutylene copolymer. Each of these polymers may be present as a mixture of a block polymer and a graft polymer. Among these polymers, polyoxypropylene is particularly preferred. The polyalkylene oxide polymer (B) preferably contains 50 wt% or more, more preferably 70 wt% or more, of the alkylene oxide repeating units in the polymer backbone.

The polymer backbone of the polyalkylene oxide polymer (B) may be a linear polymer backbone or a branched polymer backbone. The polyalkylene oxide polymer (B) may include both a linear polymer backbone and a branched polymer backbone.

The polyalkylene oxide polymer (B) may be a polymer having one type of polymer backbone or may be a mixture of two or more polymers having different polymer backbones. The mixture may be a mixture of polymers produced separately from each other or a mixture of polymers produced together in such a way as to achieve given mix proportions.

The number-average molecular weight of the polyalkylene oxide polymer (B) is not limited to a particular range. The number-average molecular weight, as measured by GPC analysis as a polystyrene-equivalent molecular weight, is preferably from 3,000 to 100,000, more preferably from 3,000 to 50,000, and particularly preferably from 3,000 to 30,000. When the number-average molecular weight is in the above range, the amount of introduced reactive silyl groups is moderate. This makes it relatively easy to produce the polyalkylene oxide polymer (B) having a viscosity suitable for handling and high workability while controlling the production cost within a desired range.

The molecular weight of the polyalkylene oxide polymer (B) can be expressed also as an end group-equivalent molecular weight, which is determined as follows: before reactive silyl group introduction, a polymer precursor is subjected to titration analysis based on the principles of the hydroxy value measurement method as specified in JIS K 1557 and the iodine value measurement method as specified in JIS K 0070 to directly measure the end group concentration, from which the end group-equivalent molecular weight is calculated taking into account the architecture of the polymer (the degree of branching which depends on the polymerization initiator used). The end group-equivalent molecular weight of the polyalkylene oxide polymer (B) can be determined also by creating a calibration curve representing the relationship between the number-average molecular weight of the polymer precursor as determined by common GPC analysis and the end group-equivalent molecular weight, determining the number-average molecular weight of the polyalkylene oxide polymer (B) by GPC analysis, and converting the determined number-average molecular weight to the end group-equivalent molecular weight based on the calibration curve.

The polyalkylene oxide polymer (B) is not limited to having a particular molecular weight distribution (Mw/Mn), but preferably has a narrow molecular weight distribution. Specifically, the dispersity Mw/Mn is preferably less than 2.0, more preferably 1.6 or less, even more preferably 1.5 or less, particularly preferably 1.4 or less, more particularly preferably 1.3 or less, and most preferably 1.2 or less. The molecular weight distribution of the polyalkylene oxide polymer (B) can be determined from the number-average and weight-average molecular weights obtained by GPC analysis.

Production of the polyalkylene oxide polymer (B) is not limited to using a particular method and can be accomplished using a known method as disclosed, for example, in WO 2016/03571.

In the curable resin composition according to the present disclosure, the amount of the polysilsesquioxane polymer (A) or the polyalkylene oxide polymer (B) can be chosen as appropriate in view of factors such as the curability of the composition and the strength of the resulting cured product. Specifically, the proportion of the polysilsesquioxane polymer (A) in the total amount of the polysilsesquioxane polymer (A) and the polyalkylene oxide polymer (B) is preferably from 1 to 50 wt%, more preferably from 1 to 30 wt%, even more preferably from 2 to 25 wt%, and particularly preferably from 3 to 20 wt%. The proportion of the polyalkylene oxide polymer (B) is preferably from 50 to 99 wt%, more preferably from 70 to 99 wt%, even more preferably from 75 to 98 wt%, and particularly preferably from 80 to 97 wt%.

### <<Curing Catalyst (C)>>

The curable resin composition according to the present disclosure contains a curing catalyst (C) for the purpose of accelerating a hydrolysis and dehydration condensation reaction of the reactive silyl group (a1) of the polysilsesquioxane polymer (A) and the reactive silyl group (b1) of the polyalkylene oxide polymer (B), i.e., a curing reaction.

In terms of improving the curability of the curable resin composition by a storing step described later, the curing catalyst used may include at least a tetravalent tin catalyst and/or a strong base catalyst. One type of such a curing catalyst may be used, or two or more types of such curing catalysts may be used in combination.

Specific examples of the tetravalent tin catalyst include dibutyltin dilaurate, dibutyltin dioctanoate, dibutyltin bis(butyl maleate), dibutyltin diacetate, dibutyltin oxide, dibutyltin bis(acetylacetonate), a reaction product of a dibutyltin salt and ethyl orthosilicate, a reaction product of dibutyltin oxide and a phthalic ester, dioctyltin diacetate, dioctyltin dilaurate, dioctyltin bis(ethyl maleate), dioctyltin bis(octyl maleate), dioctyltin bis(acetylacetonate), and a reaction product of a dioctyltin salt and ethyl orthosilicate. Dioctyltin compounds are preferred in view of the recent increased awareness of environmental issues.

Specific preferred examples of the strong base catalyst include heterocyclic amine compounds, among which a compound having an amidine skeleton is particularly preferred. Specific examples include 1,8-diazabicyclo[5,4,0]undec-7-ene (DBU), 1,5-diazabicyclo[4,3,0]non-5-ene (DBN), guanidine, phenylguanidine, diphenylguanidine, butylbiguanide, 1-o-tolylbiguanide, and 1-phenylbiguanide.

In terms of increasing the curing speed and at the same time ensuring the workability in use, the amount of the curing catalyst (C) is preferably from 0.01 to 20 parts by weight, more preferably from 0.05 to 15 parts by weight, even more preferably from 0.1 to 10 parts by weight, still even more preferably from 0.2 to 7 parts by weight, and particularly preferably from 0.5 to 5 parts by weight per 100 parts by weight of the total amount of the polysilsesquioxane polymer (A) and the polyalkylene oxide polymer (B).

### <<Other Components>>

The curable resin composition according to the present disclosure may, if necessary, contain various additives in addition to the polysilsesquioxane polymer (A), the polyalkylene oxide polymer (B), and the curing catalyst (C). Examples of the additives include a filler, a plasticizer, an adhesion promoter, a dehydrating agent, an anti-sagging agent, an antioxidant, a light stabilizer, an ultraviolet absorber, a property modifier, an epoxy group-containing compound, a photocurable material, an oxygen-curable material, and an organic resin other than the polyalkylene oxide polymer (B).

To adjust various physical properties of the curable resin composition or cured product, additives other than those mentioned above may be added to the curable resin composition if necessary. Examples of the other additives include a tackifying resin, a solvent, a diluent, an epoxy resin, a surface modifier, a blowing agent, a curability modifier, a flame retardant, a silicate, a radical inhibitor, a metal deactivator, an antiozonant, a phosphorus-based peroxide decomposer, a lubricant, a pigment, and a fungicide.

### <Adhesion Promoter>

The curable resin composition according to the present disclosure may contain an adhesion promoter. A silane coupling agent or a reaction product of the silane coupling agent can be added as the adhesion promoter.

Specific examples of the silane coupling agent include: amino group-containing silanes such as γ-aminopropyltrimethoxysilane, γ-aminopropylmethyldimethoxysilane, *N*-β-aminoethyl-γ-aminopropyltrimethoxysilane, *N*-*β*-aminoethyl-γ-aminopropylmethyldimethoxysilane, *N*-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane. Reaction products of various silane coupling agents can also be used. One adhesion promoter may be used alone, or two or more adhesion promoters may be used in combination.

The amount of the adhesion promoter is preferably from 0.1 to 20 parts by weight and more preferably from 0.5 to 10 parts by weight per 100 parts by weight of the total amount of the polysilsesquioxane polymer (A) and the polyalkylene oxide polymer (B).

### <Dehydrating Agent>

The curable resin composition according to the present disclosure may contain a dehydrating agent. A compound that can react preferentially with water over the polysilsesquioxane polymer (A) and the polyalkylene oxide polymer (B) is suitable for use as the dehydrating agent.

Specific examples of such a dehydrating agent include: silicon compounds such as methyltrimethoxysilane, dimethyldimethoxysilane, n-propyltrimethoxysilane, vinyltrimethoxysilane, phenyltrimethoxysilane, methylphenyldimethoxysilane, dimethoxydiphenylsilane, hexyltrimethoxysilane, 1,6-bis(trimethoxysilyl)hexane, vinylmethyldimethoxysilane, (methoxymethyl)trimethoxysilane, p-styryltrimethoxysilane, γ-mercaptopropylmethyldimethoxysilane, γ-glycidoxypropyltrimethoxysilane, γ-aminopropyltrimethoxysilane, *N*-(β-aminoethyl)-γ-aminopropyltrimethoxysilane, γ-acryloxypropyltrimethoxysilane, γ-methacryloxypropyltrimethoxysilane, *N*-(β-aminoethyl)-γ-aminopropylmethyldimethoxysilane, bis(3-trimethoxysilylpropyl)amine, ethoxysilane derivatives of the above-mentioned compounds, monomeric to octameric methyl silicate, monomeric to octameric ethyl silicate, methyltriacetoxysilane, and vinyl tris(2-methoxyethoxy)silane; products of partial hydrolysis and condensation of the above-mentioned silicon compounds; ester compounds, including trialkyl orthoformates such as trimethyl orthoformate, triethyl orthoformate, tripropyl orthoformate, and tributyl orthoformate and trialkyl orthoacetates such as trimethyl orthoacetate, triethyl orthoacetate, tripropyl orthoacetate, and tributyl orthoacetate; oxazolidine compounds such as 3-ethyl-2-methyl-2-(3-methylbutyl)-1,3-oxazolidine; carbamate compounds such as *N*-(trimethoxysilylmethyl)-*O*-methyl carbamate, *N*-dimethoxy(methyl)silylmethyl-*O*-methyl carbamate, and *N*-methyl[3-(trimethoxysilyl)propyl] carbamate; and phosphorus pentoxide. Other examples include *n*-propyltrimethoxysilane, vinyltrimethoxysilane, and vinylmethyldimethoxysilane. Among the above-mentioned compounds, silicon compounds having a trimethoxysilyl group are more preferred, and vinyltrimethoxysilane is particularly preferred. One dehydrating agent may be used alone, or two or more dehydrating agents may be used in combination.

The amount of the dehydrating agent is preferably from 0.1 to 20 parts by weight and more preferably from 0.5 to 10 parts by weight per 100 parts by weight of the total amount of the polysilsesquioxane polymer (A) and the polyalkylene oxide polymer (B).

### «Method for Producing Curable Resin Composition»

In production of the curable resin composition according to the present disclosure, the components are mixed to obtain a raw material composition, and subsequently the step of hermetically storing the raw material composition under heating at a given temperature is performed. Before the storage, the raw material composition generally tends to have low curability. The storage under heating significantly improves the curability of the composition and allows for a reduction in the time required for curing of the composition while maintaining high workability that the composition exhibits when, for example, applied to a substrate.

It is not clear by what mechanism the storage under heating improves the curability. A possible reason is that the storage under heating induces a reaction between the reactive silyl group (a1) of the component (A) and the reactive silyl group (bl) of the component (B) and thus brings the molecules of the components (A) and (B) close to each other, allowing a curing reaction to proceed readily in the subsequent curing step.

The term "hermetically storing" means storing the raw material composition in a container in such a way as to reduce the entry of external moisture into the container filled with the raw material composition. A specific method for accomplishing such storage is, for example, to fill a container with the raw material composition and seal the filled container under degassing or introduce a gas such as nitrogen into the filled container and then seal the container.

The container is preferably a moisture-proof container capable of preventing penetration of moisture in order to inhibit a hydrolysis reaction of the reactive silyl groups of the components (A) and (B) in the container. Specifically, the container is preferably a container that exhibits a moisture permeability of 60 mg/L or less per 24 hours at 40°C and 90% RH. The moisture permeability is preferably as low as possible. The moisture permeability is preferably 30 mg/L or less, more preferably 10 mg/L or less, and even more preferably 5 mg/L or less. Such a container can be a common cartridge container used to hold a moisture-curable resin composition. The moisture permeability can be determined, for example, by carrying out a measurement method according to JIS Z 0222:1959, converting the measured value to the amount (g) of passing water vapor per 24 hours, and dividing the amount of passing water vapor per 24 hours by the volume (L) of the container.

During the hermetic storage of the raw material composition, the raw material composition may be stirred or shaken. There is no need for stirring or the like of the raw material composition, and the raw material composition may be allowed to stand in the container.

The temperature during the storage is controlled in the range of 40 to 150°C in terms of avoiding alteration or decomposition of the components of the composition and at the same time achieving the curability improving effect. The temperature is preferably at least 45°C and more preferably at least 50°C. The temperature is preferably up to 120°C, more preferably up to 100°C, and even more preferably up to 90°C.

The time for which the raw material composition is kept under heating depends on the temperature during the storage and cannot be definitely specified. The time may be chosen as appropriate in view of the curability improving effect. The longer the time of storage is, the greater the curability improving effect tends to be. Specifically, the time of storage is preferably 1 hour or more, more preferably 5 hours or more, even more preferably 12 hours or more, still even more preferably 1 day or more, and particularly preferably 2 days or more.

The upper limit of the time is not limited to a particular length of time and may be chosen as appropriate in terms of the curability improving effect and the productivity. The time may be 8 weeks or less. The time may be 6 weeks or less or may be 4 weeks or less.

When obtaining the raw material composition by mixing the components with one another, it may be possible to mix all of the components together to obtain the raw material composition. However, in a preferred aspect, the component (A), the component (B), and other optional components (such as a plasticizer and a filler) are first mixed and subjected to thermal dehydration to obtain a mixture containing the components (A) and (B), then the mixture is cooled, and after that the curing catalyst (C) and other optional components (such as a dehydrating agent and an adhesion promoter) are added to the cooled mixture to obtain the raw material composition. This way of obtaining the raw material composition makes it possible to effectively prevent a curing reaction from taking place during preparation of the raw material composition while ensuring thorough mixing of the components.

The thermal dehydration is not limited to using particular conditions and may be performed under any conditions where moisture can be removed. For example, the thermal dehydration may be performed by heating the mixed components to a temperature of about 40 to about 150°C under normal pressure or preferably under reduced pressure. The temperature at which the resulting mixture is cooled is not limited to a particular range. The cooling temperature may be any temperature that is lower than the temperature during the thermal dehydration and that ranges, for example, from about normal temperature to about 60°C.

The curable resin composition produced by the method according to the present disclosure is prepared as a one-part composition which contains all of its components mixed together. When used, this composition cures under the action of moisture in the air. Such a one-part curable resin composition is advantageous in terms of workability in use.

Before curing, the curable resin composition is formed into a desired shape by a process such as application, casting, or filling. The curable resin composition formed into a desired shape by application, casting, or filling can be cured by placing it at normal temperature or under heating in an environment where moisture is present (typically in the air). The curing under heating is not limited to using particular conditions. Preferably, the curing temperature is from 60 to 220°C and the curing time is from 1 to 120 minutes. More preferably, the curing temperature is from 100 to 200°C and the curing time is from 5 to 60 minutes.

The curable resin composition according to the present disclosure can be used as an adhesive, a pressure-sensitive adhesive, a sealing material for sealing purposes in buildings, ships, automobiles, buses, roads, and household electric appliances, a mold making material, a paint, or a spray material. A cured product obtained by curing the curable resin composition is suitable for use as a waterproof material, a waterproof coating material, a vibration-isolating material, a vibration-damping material, a soundproof material, or a foam material.

In the following items, preferred aspects of the present disclosure are listed. The present invention is not limited to the following items.

### [Item 1]

A method for producing a curable resin composition, the method including the step of hermetically storing a raw material composition at a temperature of 40 to 150°C, wherein
the raw material composition contains:
a polysilsesquioxane polymer (A) having a reactive silyl group and a hydrocarbon group bonded directly to a silicon atom of a polysilsesquioxane backbone;
a polyalkylene oxide polymer (B) having a reactive silyl group and having no polysilsesquioxane backbone; and
a curing catalyst (C) including a tetravalent tin catalyst and/or a strong base catalyst.

### [Item 2]

The method according to item 1, wherein the storing is performed in a container that exhibits a moisture permeability of 60 mg/L or less per 24 hours at 40°C and 90% RH.

### [Item 3]

The method according to item 1 or 2, wherein a time of the storing is from 1 hour to 8 weeks.

### [Item 4]

The method according to any one of items 1 to 3, further including the steps of
mixing the polysilsesquioxane polymer (A) and the polyalkylene oxide polymer (B) and subjecting the mixed polymers (A) and (B) to thermal dehydration to obtain a mixture; and
cooling the mixture and adding the curing catalyst (C) to the cooled mixture to obtain the raw material composition.

### [Item 5]

The method according to any one of items 1 to 4, wherein the strong base catalyst is a compound having an amidine skeleton.

### [Item 6]

The method according to any one of items 1 to 5, wherein the polysilsesquioxane polymer (A) further has a polyalkylene oxide polymer chain and/or poly(meth)acrylic polymer chain bonded to the polysilsesquioxane backbone.

### [Item 7]

The method according to any one of items 1 to 6, wherein a proportion of the polysilsesquioxane polymer (A) in a total amount of the polysilsesquioxane polymer (A) and the polyalkylene oxide polymer (B) is from 1 to 30 wt%.

### Examples

Hereinafter, the present invention will be described in more detail using examples. The present invention is not limited to the examples given below.

The number-average and weight-average molecular weights in Synthesis Examples are GPC molecular weights measured under the following conditions.
Delivery system: HLC-8420 GPC manufactured by Tosoh Corporation
Column: TSKgel SuperH series manufactured by Tosoh Corporation
Solvent: THF
Molecular weight: Polystyrene equivalent
Measurement temperature: 40°C

The end group-equivalent molecular weights in Synthesis Examples are molecular weights each of which was measured as follows: hydroxy and iodine values were measured, respectively, by the measurement method as specified in JIS K 1557 and the measurement method as specified in JIS K 0070, and the molecular weight was calculated based on the hydroxy and iodine values taking into account the architecture of the organic polymer (the degree of branching which depends on the polymerization initiator used).

The average number of introduced silyl groups in each of the polymers of Synthesis Examples was determined by NMR analysis.

### (Synthesis Example 1)

Propylene oxide was polymerized using butanol as an initiator in the presence of a zinc hexacyanocobaltate-glyme complex catalyst to obtain polyoxypropylene terminated at one end by a hydroxy group and having a number-average molecular weight of 7,800 (end group-equivalent molecular weight = 5,000) and a dispersity Mw/Mn of 1.48.

Subsequently, sodium methoxide dissolved in methanol at a concentration of 28% was added in an amount of 1.2 molar equivalents per molar equivalent of the hydroxy groups of the hydroxy-terminated polyoxypropylene. Methanol was distilled off by evaporation under vacuum, and then 2.0 molar equivalents of allyl chloride was added per molar equivalent of the hydroxy groups of the polymer to convert the terminal hydroxy groups to allyl groups. Allyl chloride remaining unreacted was removed by evaporation under reduced pressure. To the resulting unpurified polyoxypropylene were added *n*-hexane and water, and the mixture was stirred and then centrifuged to remove water. Hexane was evaporated from the resulting hexane solution under reduced pressure, and thus the metal salt was removed from the polymer. In this manner, polyoxypropylene terminated at only one end by an allyl group was obtained.

To 500 g of the obtained polymer was added 50 µl of a platinum-divinyldisiloxane complex (2-propanol solution with a concentration of 3 wt% calculated as the platinum content), and 9.5 g of dimethoxymethylsilane was slowly added dropwise under stirring. The liquid mixture was reacted at 100°C for 2 hours, after which dimethoxymethylsilane remaining unreacted was distilled off under reduced pressure to obtain polyoxypropylene (a3') terminated at only one end by a dimethoxymethylsilyl group. This polymer terminated at only one end by a dimethoxymethylsilyl group was found to have 0.8 dimethoxymethylsilyl groups on average per molecule.

### (Synthesis Example 2)

At room temperature, a four-necked flask equipped with a stirrer was charged with 10.1 parts by weight of the polyoxypropylene (a3') obtained in Synthesis Example 1 and terminated at only one end by a dimethoxymethylsilyl group, 88.3 parts by weight of methyltrimethoxysilane as a silane monomer, 66.9 parts by weight of phenyltrimethoxysilane as a silane monomer, 21.2 parts by weight of water (40 mol% based on 100 mol% of the alkoxy groups of the alkoxysilane components), and 0.1 parts by weight of a 10% aqueous LiBr solution. The contents of the flask were then heated and reacted for 6 hours under reflux with methanol generated during the reaction. Methanol was removed from the resulting methanol solution by heating under reduced pressure to obtain a polysilsesquioxane polymer (A-1) having a polyalkylene oxide polymer chain (a3). The polysilsesquioxane polymer (A-1) was found by ¹H NMR to have a reactive silyl group. Only one end of the polyalkylene oxide polymer chain (a3) is bonded to the polysilsesquioxane backbone.

### (Synthesis Example 3)

At room temperature, a four-necked flask equipped with a stirrer was charged with 10.1 parts by weight of the polyoxypropylene (a3') obtained in Synthesis Example 1 and terminated at only one end by a dimethoxymethylsilyl group, 117.7 parts by weight of methyltrimethoxysilane as a silane monomer, 44.6 parts by weight of phenyltrimethoxysilane as a silane monomer, 23.5 parts by weight of water (40 mol% based on 100 mol% of the alkoxy groups of the alkoxysilane components), and 0.1 parts by weight of a 10% aqueous LiBr solution. The contents of the flask were then heated and reacted for 6 hours under reflux with methanol generated during the reaction. Methanol was removed from the resulting methanol solution by heating under reduced pressure to obtain a polysilsesquioxane polymer (A-2) having a polyalkylene oxide polymer chain (a3). The polysilsesquioxane polymer (A-2) was found by ¹H NMR to have a reactive silyl group. Only one end of the polyalkylene oxide polymer chain (a3) is bonded to the polysilsesquioxane backbone.

### (Synthesis Example 4)

Propylene oxide was polymerized using polyoxypropylene triol having a number-average molecular weight of about 4,500 as an initiator in the presence of a zinc hexacyanocobaltate-glyme complex catalyst to obtain polyoxypropylene terminated by a hydroxy group and having a number-average molecular weight of 24,600 (end group-equivalent molecular weight = 17,400) and a dispersity Mw/Mn of 1.31.

Sodium methoxide dissolved in methanol at a concentration of 28% was added in an amount of 1.2 molar equivalents per molar equivalent of the hydroxy groups of the hydroxy-terminated polyoxypropylene obtained as above. Methanol was distilled off by evaporation under vacuum, and then 1.5 molar equivalents of allyl chloride was added per molar equivalent of the hydroxy groups of the polymer to convert the terminal hydroxy groups to allyl groups. Allyl chloride remaining unreacted was removed by evaporation under reduced pressure. To the resulting unpurified polyoxypropylene were added *n*-hexane and water, and the mixture was stirred and then centrifuged to remove water. Hexane was evaporated from the resulting hexane solution under reduced pressure, and thus the metal salt was removed from the polymer. In this manner, polyoxypropylene terminated by an allyl group was obtained.

To 500 g of this polymer was added 50 µl of a solution of a platinum-divinyldisiloxane complex (isopropanol solution with a concentration of 3 wt% calculated as the platinum content), and 6.4 g of dimethoxymethylsilane was slowly added dropwise under stirring. The liquid mixture was reacted at 100°C for 2 hours, after which dimethoxymethylsilane remaining unreacted was distilled off under reduced pressure to obtain polyoxypropylene (B-1) terminated by a dimethoxymethylsilyl group and having a number-average molecular weight of 26,200. The polymer (B-1) was found to have 0.7 dimethoxymethylsilyl groups on average per end and 2.2 dimethoxymethylsilyl groups on average per molecule. The polymer (B-1) has no polysilsesquioxane backbone.

### (Synthesis Example 5)

Propylene oxide was polymerized using a mixture of polyoxypropylene glycol having a number-average molecular weight of about 4,500 and polyoxypropylene triol having a number-average molecular weight of about 4,500 (polyoxypropylene glycol:polyoxypropylene triol weight ratio = 60:40) as an initiator in the presence of a zinc hexacyanocobaltate-glyme complex catalyst. This polymerization yielded polyoxypropylene terminated by a hydroxy group and having a number-average molecular weight of 19,000 and a dispersity Mw/Mn of 1.28.

Sodium methoxide dissolved in methanol at a concentration of 28% was added in an amount of 1.2 molar equivalents per molar equivalent of the hydroxy groups of the polymer obtained as above. Methanol was distilled off by evaporation under vacuum, and then 1.5 molar equivalents of allyl chloride was added per molar equivalent of the hydroxy groups of the polymer to convert the terminal hydroxy groups to allyl groups. Allyl chloride remaining unreacted was removed by evaporation under reduced pressure. To the resulting unpurified allyl-terminated polyoxypropylene were added *n*-hexane and water, and the mixture was stirred and then centrifuged to remove water. Hexane was evaporated from the resulting hexane solution under reduced pressure, and thus the metal salt was removed from the polymer. In this manner, polyoxypropylene terminated by an allyl group was obtained.

To 500 g of this polymer were added 25 mg of a platinum-divinyldisiloxane complex (isopropanol solution with a concentration of 3 wt% calculated as the platinum content) and 6.8 g of dimethoxymethylsilane, and a hydrosilylation reaction was carried out. The reaction was allowed to proceed at 90°C for 2 hours, after which dimethoxymethylsilane remaining unreacted was distilled off under reduced pressure to obtain polyoxypropylene (B-2) terminated by a dimethoxymethylsilyl group and having a number-average molecular weight of 19,000. The polymer (B-2) was found to have 1.6 dimethoxymethylsilyl groups on average per molecule. The polymer (B-2) has no polysilsesquioxane backbone.

### (Example 1)

The following components were mixed: 15 parts by weight of the component (A), 85 parts by weight of the component (B), and 50 parts by weight of surface-treated colloidal calcium carbonate (manufactured by Shiraishi Kogyo Kaisha, Ltd., trade name: Hakuenka CCR). The component (A) was the polysilsesquioxane polymer (A-1) obtained in Synthesis Example 2 and the component (B) was the polyoxypropylene (B-1) obtained in Synthesis Example 4. The mixture was thoroughly kneaded and then passed through a small-sized three-roll paint mill once. After that, the mixture was dehydrated under reduced pressure at 120°C for 2 hours and cooled to 50°C or below. To the cooled mixture were added 3 parts by weight of vinyltrimethoxysilane as a dehydrating agent (manufactured by Momentive Performance Materials Inc., trade name: Silquest A-171), 2 parts by weight of γ-(2-aminoethyl)aminopropyltrimethoxysilane as an adhesion promoter (manufactured by Momentive Performance Materials Inc., trade name: Silquest A-1 120), and 1.0 parts by weight of dibutyltin dilaurate as the curing catalyst (C) (manufactured by Nitto Kasei Co., Ltd., trade name: Neostann U-100). The mixture was kneaded and placed into a moisture-proof cartridge container (volume = 330 cc) that exhibits a moisture permeability of 1 mg/330 cc per 24 hours at 40°C and 90% RH, and the container was hermetically sealed. In this manner, a curable resin composition was obtained. The obtained curable resin composition was stored by allowing it to stand under the conditions (temperature and time) shown in Table 1. The viscosity, curability, and tensile properties of the curable resin composition were measured as described below during an initial period (before the storage) and after the storage.

### (Viscosity)

During the initial period (before the storage) or after the storage, the curable resin composition was placed overnight in a constant temperature room at 23°C and 50% RH, and then the viscosity at 2 rpm of the composition was measured using TVB-10U, a viscometer manufactured by Toki Sangyo Co., Ltd., in combination with rotor H5. The viscosity at 2 rpm measured after the storage was divided by the viscosity at 2 rpm measured during the initial period to determine a viscosity increase ratio.

### (Curability)

The curable resin composition was spread by means of a spatula, and this moment was defined as a start time point. The surface of the composition was touched with the spatula, and the time (skinning time) taken for the composition to become non-sticky to the spatula was measured.

### (Tensile Properties)

The curable resin composition was molded into a sheet-shaped specimen with a thickness of 3 mm. The specimen was placed at 23°C and 50% RH for 3 days and then in a dryer set to 50°C for 4 days, and thus the specimen was completely cured. The cured specimen was punched into a No. 3 dumbbell-shaped piece, whose tensile strength at break (shown as "TB") was measured by a tensile test performed at a tensile speed of 200 mm/min using Autograph manufactured by Shimadzu Corporation.

### (Examples 2 to 9 and Comparative Examples 1 to 5)

Curable resin compositions were obtained and evaluated in the same manner as the curable resin composition of Example 1, except that the amounts of the components were changed as shown in Table 1. The results are shown in Table 1.

The curing catalysts listed in Table 1 are as follows.
TIB KAT 223 (dioctyltin bis(acetylacetonate), TIB Chemicals AG)
Neostann S-1 (reaction product of dioctyltin salt and ethyl orthosilicate, Nitto Kasei Co., Ltd.)
Neostann U-810 (dioctyltin dilaurate, Nitto Kasei Co., Ltd.)
DBU (1,8-diazabicyclo[5,4,0]undec-7-ene)
Neostann U-28 (tin(II) octylate, Nitto Kasei Co., Ltd.)
Orgatix TC-750 (titanium ethyl acetoacetate, Matsumoto Fine Chemical Co., Ltd.)

**[Table 1]**

| | | Ex. | | | | | | | | | Comp. | | | | |
|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 |
| Component (A) | A-1 | 15 | 5 | 5 | 5 | 5 | 15 | 15 | 20 | | | | | 5 | 5 |
| | A-2 | | | | | | | | | 5 | | | | | |
| Component (B) | B-1 | 85 | 95 | 95 | 95 | 95 | 85 | 85 | 80 | 95 | 100 | 100 | 100 | 95 | 95 |
| Colloidal calcium carbonate | Hakuenka CCR | 50 | 50 | 50 | 50 | 50 | 50 | 50 | 50 | 50 | 50 | 50 | 50 | 50 | 50 |
| Adhesion promoter | SilquestA-1120 | 2 | 2 | 2 | 2 | 2 | 2 | 2 | 2 | 2 | 2 | 2 | 2 | 2 | 2 |
| Dehydrating agent | SilquestA-171 | 3 | 3 | 3 | 3 | 3 | 3 | 3 | 3 | 3 | 3 | 3 | 3 | 3 | 3 |
| Component (C) (tetravalent tin) | Neostann U-100 | 1 | 1 | | | | | | | 1 | 1 | | | | |
| | TIB KAT 223 | | | 1 | | | | | | | | | | | |
| | Neostann S-1 | | | | 1 | | | | | | | 1 | | | |
| | Neostann U-810 | | | | | 1 | | | | | | | | | |
| Component (C) (strong base) | DBU | | | | | | 1 | 2 | 3 | | | | 3 | | |
| Curing catalyst (divalent tin) | Neostann U-28 | | | | | | | | | | | | | 1 | |
| Curing catalyst (titanium-based) | Orgatix TC750 | | | | | | | | | | | | | | 1 |
| Total | | 156 | 156 | 156 | 156 | 156 | 156 | 157 | 158 | 156 | 156 | 156 | 158 | 156 | 156 |
| Initial period | | | | | | | | | | | | | | | |
| Viscosity | (Pa·s) | 276 | 310 | 304 | 296 | 297 | 367 | 349 | 685 | 325 | 309 | 319 | 329 | 332 | 307 |
| Curability | Skinning time | 8 to 16 h | 8 to 16 h | 5 h 3 min | 3h8min | 27 h | 24 h to 40 h | 8 to 16 h | 1 h 52 min | 28 h | 7 h 04 min | 1h 17 min | 4 h 53 min | 30 h | > 1 W |
| After storage (at 50°C for 2 weeks) | | | | | | | | | | | | | | | |
| Viscosity | (Pa·s) | 351 | 392 | - | - | - | - | - | - | 394 | - | - | - | - | - |
| | Viscosity increase ratio | 1.27 | 1.26 | - | - | - | - | - | - | 1.21 | - | - | - | - | - |
| Curability | Skinning time | 54 min | 46 min | - | - | - | - | - | - | 1 h 4 min | - | - | - | - | - |
| After storage (at 50°C for 4 weeks) | | | | | | | | | | | | | | | |
| Viscosity | (Pa·s) | 476 | 518 | 573 | -*1 | 477 | 622 | 399 | -*1 | 489 | 328 | 351 | 381 | 355 | - |
| | Viscosity increase ratio | 1.72 | 1.67 | 1.88 | | 1.61 | 1.69 | 1.14 | | 1.5 | 1.06 | 1.1 | 1.16 | 1.07 | - |
| Curability | Skinning time | 17 min | 17 min | 13 min | 9 min | 31 min | 56 min | 27 min | < 6 min | 17 min | 2 h 6 min | 34 min | 3h | 7 to 23 h | - |
| Tensile properties | TB (MPa) | 2.61 | 2.26 | 2.19 | 2.31 | 2.23 | 3 | 2.87 | 2.75 | 2.37 | 1.93 | 2.05 | 2.02 | 2.21 | - |
| After storage (at 80°C for 1 day) | | | | | | | | | | | | | | | |
| Viscosity | (Pa·s) | - | - | - | - | - | - | - | - | 337 | - | - | - | - | - |
| | Viscosity increase ratio | - | - | - | - | - | - | - | - | 1.04 | - | - | - | - | - |
| Curability | Skinning time | - | - | - | - | - | - | - | - | 5 h 25 min | - | - | - | - | - |
| After storage (at 80°C for 3 days) | | | | | | | | | | | | | | | |
| Viscosity | (Pa·s) | - | - | 218 | 576 | 434 | - | 401 | 555 | 513 | - | 380 | 294 | 410 | 320 |
| | Viscosity increase ratio | - | - | 0.72 | 1.95 | 1.46 | - | 1.15 | 0.81 | 1.58 | - | 1.19 | 0.89 | 1.23 | 1.04 |
| Curability | Skinning time | - | - | 13 min | 9 to 13 min n | 25 min | - | 47 min | 8 to 12 min | 14 min | - | 33 min | 4h | 8 to 15 h | >1W |
| Tensile properties | TB (MPa) | - | - | 2.2 | 2.36 | 2.12 | - | 2.54 | 2.86 | 2.25 | - | 2.14 | 2.13 | 2.15 | -*2 |

| | | | | | | | | | | | | | | | |
|---|---|---|---|---|---|---|---|---|---|---|---|---|---|---|---|
| *1 Measurement was impossible due to extremely high curing speed. *2 Measurement was not performed because the composition remained uncured. | | | | | | | | | | | | | | | |

Table 1 reveals the following findings. In Example 1, where the components (A) and (B) were blended and a tetravalent tin compound was added as a curing catalyst, the skinning time measured during the initial period (before the storage under heating) was from 8 to 16 hours, while the skinning time measured after 2-week storage at 50°C was 54 minutes and the skinning time measured after 4-week storage at 50°C was 17 minutes. This demonstrates that the storage under heating provided a significant improvement in curability. The same is true of Examples 2 to 5 and 9 and of Examples 6 to 8 where a strong base was used as a curing catalyst.

In Comparative Example 1, where the component (B) and a tetravalent tin compound were blended without using the component (A), the skinning time measured during the initial period was about 7 hours, while the skinning time measured after 4-week storage at 50°C was about 2 hours. Although the storage under heating provided an improvement in curability, the amount of improvement was smaller than in Examples 1 to 9. The same is true of Comparative Example 2 and of Comparative Example 3 where a strong base was used as a curing catalyst.

In Comparative Example 4, where a divalent tin compound was used as a curing catalyst, the skinning time measured after the storage under heating was 7 hours or more, which demonstrates that the storage under heating had a small curability improving effect. In Comparative Example 5, where a titanium-based curing catalyst was used, the composition had extremely low curability, and even after the storage under heating, the composition failed to cure in 1 week or more.

It is also seen that in any of Examples 1 to 9, the storage under heating did not cause any significant increase in viscosity and the composition maintained its high workability after the storage under heating. That is, in all of Examples, the storage under heating provided a marked improvement in curability without causing any significant increase in viscosity.

Another finding is that the cured products obtained in Examples 1 to 9 exhibited a higher tensile strength at break than those obtained in Comparative Examples 1 to 3.

### (Example 10)

The following components were mixed: 15 parts by weight of the component (A), 85 parts by weight of the component (B), 50 parts by weight of polyoxypropylene glycol (manufactured by Mitsui Chemicals & SKC Polyurethanes Inc., trade name: Actcol P-23), and 250 parts by weight of surface-treated ground calcium carbonate (manufactured by Imerys, trade name: Carbital 110S). The component (A) was the polysilsesquioxane polymer (A-1) obtained in Synthesis Example 2 and the component (B) was the polyoxypropylene (B-2) obtained in Synthesis Example 5. The mixture was thoroughly kneaded and then passed through a small-sized three-roll paint mill once. After that, the mixture was dehydrated under reduced pressure at 120°C for 2 hours and cooled to 50°C or below. To the cooled mixture were added 5 parts by weight of vinyltrimethoxysilane as a dehydrating agent (manufactured by Momentive Performance Materials Inc., trade name: Silquest A-171), 3 parts by weight of γ-(2-aminoethyl)aminopropyltrimethoxysilane as an adhesion promoter (manufactured by Momentive Performance Materials Inc., trade name: Silquest A-1120), and 1.0 parts by weight of dibutyltin dilaurate as the curing catalyst (C) (manufactured by Nitto Kasei Co., Ltd., trade name: Neostann U-100). The mixture was kneaded and placed into a moisture-proof cartridge container (volume = 330 cc) that exhibits a moisture permeability of 1 mg/330 cc per 24 hours at 40°C and 90% RH, and the container was hermetically sealed. In this manner, a curable resin composition was obtained. The obtained curable resin composition was stored by allowing it to stand under the conditions (temperature and time) shown in Table 2. The viscosity and curability of the curable resin composition were measured as described above during an initial period (before the storage) and after the storage.

### (Example 11 and Comparative Example 6)

Curable resin compositions were obtained and evaluated in the same manner as the curable resin composition of Example 10, except that the amounts of the components were changed as shown in Table 2. "TIB KAT K25" listed in Table 2 is potassium neodecanoate (manufactured by TIB Chemicals AG).

**[Table 2]**

| | | Ex. | | Comp. |
|---|---|---|---|---|
| | | 10 | 11 | 6 |
| Component (A) | A-1 | 15 | 15 | 15 |
| Component (B) | B-2 | 85 | 85 | 85 |
| Plasticizer | Actcol P-23 | 50 | 50 | 50 |
| Ground calcium carbonate | Carbital 110S | 250 | 250 | 250 |
| Adhesion promoter | A-1120 | 3 | 3 | 3 |
| Dehydrating agent | A-171 | 5 | 5 | 5 |
| Component (C) (tetravalent tin) | Neostann U-100 | 1 | | |
| Component (C) (strong base) | DBU | | 0.5 | |
| Curing catalyst (potassium-based) | TIB KAT K25 | | | 2 |
| Total | | 394 | 393.5 | 395 |
| Initial period | | | | |
| Viscosity | (Pa·s) | 172 | 167 | 208 |
| Curability | Skinning time | 8 to 16h | 8 to 16h | 2h 36 min |
| After storage (at 50°C for 4 weeks) | | | | |
| Viscosity | (Pa·s) | 263 | 218 | 261 |
| | Viscosity increase ratio | 1.53 | 1.31 | 1.25 |
| Curability | Skinning time | 48 min | 3h 24 min | 2h 2 min |
| After storage (at 80°C for 3 days) | | | | |
| Viscosity | (Pa·s) | 232 | 189 | 238 |
| | Viscosity increase ratio | 1.35 | 1.13 | 1.14 |
| Curability | Skinning time | 26 min | 3h 10 min | 2h 5 min |

Table 2 reveals that in Examples 10 and 11, where the components (A) and (B) were blended and a tetravalent tin catalyst or a strong base catalyst was used as a curing catalyst, the storage under heating provided a marked improvement in curability. In Comparative Example 6, where a potassium-based curing catalyst was used, the storage induced little improvement in curability.

## Claims

1. A method for producing a curable resin composition, the method comprising the step of hermetically storing a raw material composition at a temperature of 40 to 150°C, wherein
the raw material composition comprises:
a polysilsesquioxane polymer (A) having a reactive silyl group and a hydrocarbon group bonded directly to a silicon atom of a polysilsesquioxane backbone;
a polyalkylene oxide polymer (B) having a reactive silyl group and having no polysilsesquioxane backbone; and
a curing catalyst (C) comprising a tetravalent tin catalyst and/or a strong base catalyst.

2. The method according to claim 1, wherein the storing is performed in a container that exhibits a moisture permeability of 60 mg/L or less per 24 hours at 40°C and 90% RH.

3. The method according to claim 1 or 2, wherein a time of the storing is from 1 hour to 8 weeks.

4. The method according to claim 1 or 2, further comprising the steps of:
mixing the polysilsesquioxane polymer (A) and the polyalkylene oxide polymer (B) and subjecting the mixed polymers (A) and (B) to thermal dehydration to obtain a mixture; and
cooling the mixture and adding the curing catalyst (C) to the cooled mixture to obtain the raw material composition.

5. The method according to claim 1 or 2, wherein the strong base catalyst is a compound having an amidine skeleton.

6. The method according to claim 1 or 2, wherein the polysilsesquioxane polymer (A) further has a polyalkylene oxide polymer chain and/or poly(meth)acrylic polymer chain bonded to the polysilsesquioxane backbone.

7. The method according to claim 1 or 2, wherein a proportion of the polysilsesquioxane polymer (A) in a total amount of the polysilsesquioxane polymer (A) and the polyalkylene oxide polymer (B) is from 1 to 30 wt%.
